# EUROPEAN PATENT APPLICATION

(11) **EP 4 206 501 A1**
(43) Date of publication of application: **05.07.2023**
(21) Application number: 21879266.1
(22) Date of filing: 29.09.2021
(51) Int. Cl.: F16K 1/00, F16K 1/36, F16K 1/42, F16K 31/06

(54) **FLOW REGULATING VALVE**

(30) Priority: 12.10.2020 CN 202011085917
(71) Applicant: Zhejiang Dunan Artificial Environment Co., Ltd., Shaoxing Zhejiang 311835 (CN)
(72) Inventor: ZHAN, Shaojun, Shaoxing, Zhejiang 311835 (CN); XU, Guanjun, Shaoxing, Zhejiang 311835 (CN)
(74) Representative: Berggren Oy
(86) International application number: PCT/CN2021/121855
(87) International publication number: WO 2022/078220

(57) **Abstract**

The invention is a flow regulating valve. The flow regulating valve includes: a valve body (10), where the valve body (10) is provided with a valve port, and an inner wall of the valve port is provided with a first conical surface (11); and a valve head (20), where an end of the valve head (20) is provided with a fillet (21), the valve head (20) is movably arranged in the valve body (10), to close or open the valve port, and when the valve port is closed, the fillet (21) abuts against the first conical surface (11). The inner wall of the valve port is further provided with a second conical surface (12), and an end with a smaller diameter of the second conical surface (12) is connected with an end with a larger diameter of the first conical surface (11).

## Description

### Technical Field

The invention relates to the technical field of flow regulating valves, in particular to a flow regulating valve.

### Background

In general, a valve port of a flow regulating valve is opened or closed through movement of a valve head in a valve body. In the prior art, a peripheral edge of the end of the valve head usually comes into contact with an inner wall of the valve port to form a sealing surface, so as to achieve sealing to close the valve port. However, the sealing surface of the valve head has a sharp corner and is likely to wear, which affects sealing reliability and the service life of the flow regulating valve.

### Summary

The invention provides a flow regulating valve for reducing wear of a valve head and improving sealing reliability of a valve port.

In order to achieve the above objective, the invention provides a flow regulating valve. The flow regulating valve includes: a valve body, wherein the valve body is provided with a valve port, and an inner wall of the valve port is provided with a first conical surface; and a valve head, wherein an end of the valve head is provided with a fillet, the valve head is movably disposed in the valve body, to close or open the valve port, and when the valve port is closed, the fillet abuts against the first conical surface.

By using the solution, the fillet is arranged at the end of the valve head, and the valve port is sealed through abutment of the fillet against the first conical surface. The fillet is used to reduce wear during contact, thereby improving the sealing reliability and prolonging service life of the flow regulating valve.

Further, a radius of the fillet is R, 0.1 mm≤R≤1.0 mm. The radius of the fillet is set to fall within the above range, such that machining is facilitated, and a desirable sealing effect is achieved.

Further, an outer peripheral surface of the valve head is a cylindrical surface, and an included angle between the cylindrical surface and the first conical surface is A, A≤10°. In this way, after the valve port is closed, a gap between the outer peripheral surface of the valve head and the first conical surface is very small, such that the sealing effect is improved and internal leakage is reduced.

Further, when the valve port is closed, a distance between an end with a larger diameter of the first conical surface and an end surface of the valve head is L, L≤2 mm.

Further, the inner wall of the valve port is further provided with a second conical surface, and an end with a smaller diameter of the second conical surface is connected with an end with a larger diameter of the first conical surface. By arranging the second conical surface, a flow characteristic curve is in a shape of polygonal line in the process of opening or closing the valve port, thus satisfying use requirements in some cases.

Further, an included angle between a generatrix of the first conical surface and a radial plane of the valve body is a and an included angle between a generatrix of the second conical surface and the radial plane of the valve body is b, wherein a>b. Through the above arrangement, in the process of opening or closing the valve port, a flow area between an outer wall of the valve head and the inner wall of the valve port changes in a shape of polygonal line, such that the flow characteristic curve has a shape of polygonal line.

Further, the valve body is provided with an accommodation cavity, the valve port is in communication with the accommodation cavity, and the valve head is movably disposed in the accommodation cavity.

Further, a side wall of the valve body is provided with a circulation port, and when the valve port is opened, the valve port is in communication with the circulation port. Under the condition that the valve port is closed, the valve port is disconnected from the circulation port.

Further, the flow regulating valve further includes: a guide sleeve disposed in the valve body, wherein the valve head is movably disposed in the guide sleeve; and a drive portion, wherein the drive portion is in drive connection to the valve head to drive the valve head to move. The guide sleeve is able to guide the valve head to make the valve head move smoothly. The drive portion is able to use an electromagnetic drive mode.

Further, the flow regulating valve is an electronic expansion valve or other forms of flow regulating valves.

According to the technical solution of the invention, the flow regulating valve is provided. The flow regulating valve includes the valve body and the valve head, wherein the valve body is provided with the valve port, and the inner wall of the valve port is provided with the first conical surface; and the end of the valve head is provided with the fillet, the valve head is movably disposed in the valve body, to close or open the valve port, and when the valve port is closed, the fillet abuts against the first conical surface. By using the solution, the fillet structure is disposed at the end of the valve head, and the valve port is sealed through abutment of the fillet against the first conical surface. The fillet structure is able to be used to reduce wear during contact, thereby improving the sealing reliability and prolonging the service life of the flow regulating valve.

### Brief Description of the Drawings

As a constituent part of the invention, the drawings of the description are used to provide further understanding of the invention, and exemplary embodiments of the invention and description thereof serve to explain the invention, and do not constitute improper limitation to the invention. In the accompanying drawings:
Fig. 1 shows a schematic structural diagram of a flow regulating valve according to Example 1 of the invention;
Fig. 2 shows a schematic structural diagram of a flow regulating valve according to Example 2 of the invention;
Fig. 3 shows a partial enlarged view of the flow regulating valve in Fig. 2;
Fig. 4 shows a perspective view of the flow regulating valve in Fig. 2; and
Fig. 5 shows a schematic diagram of a flow characteristic curve of the flow regulating valve in Fig. 2.

The accompanying drawings include the following reference numerals:
10. valve body; 11. first conical surface; 12. second conical surface; 20. valve head; 21. fillet; 22. end surface; 30. guide sleeve; and 40. drive portion.

### Detailed Description of the Embodiments

Technical solutions in embodiments of the invention will be described below clearly and comprehensively in conjunction with accompanying drawings in the embodiments of the invention. Apparently, the described embodiments are merely some embodiments rather than all embodiments of the invention. The following description of at least one exemplary embodiment is merely illustrative in effect, and is in no way intended to limit the invention, an application or use thereof. Based on the embodiments of the invention, all other embodiments derived by those of ordinary skill in the art without making creative efforts shall fall within the protection scope of the invention.

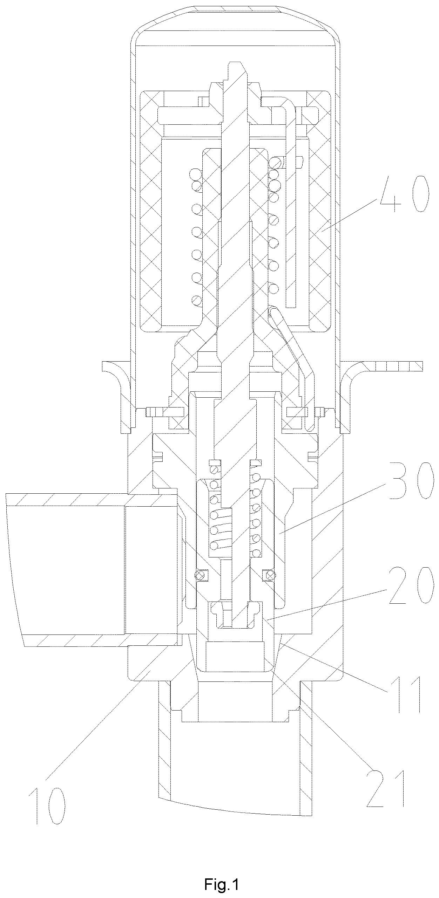

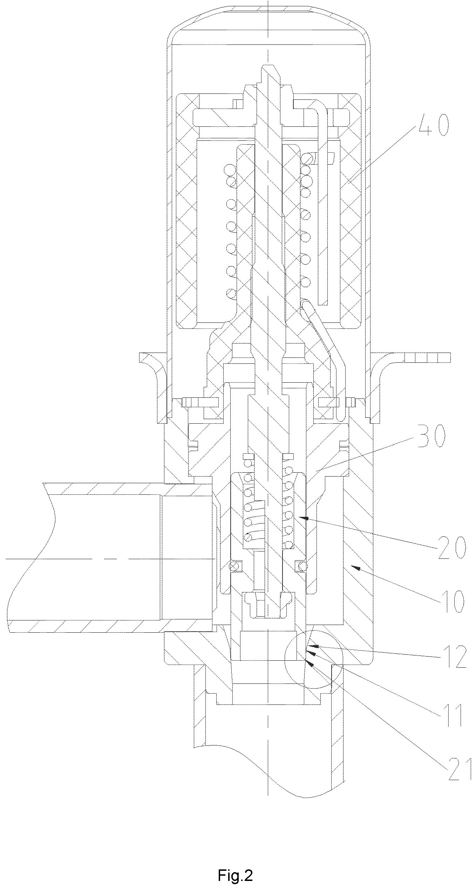

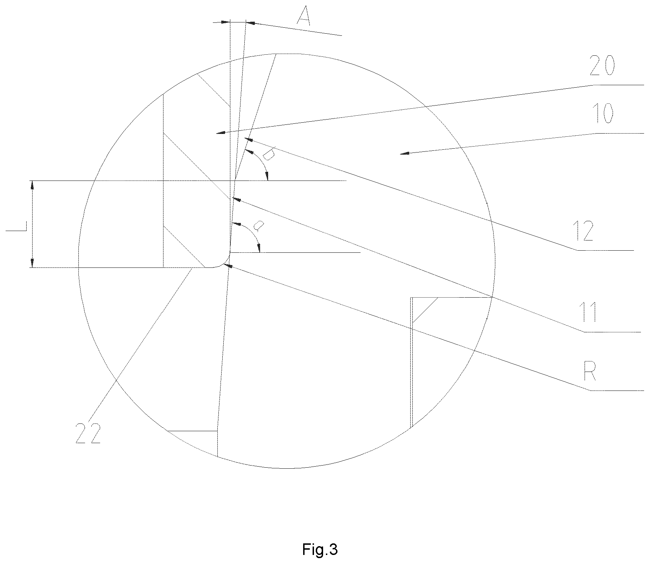

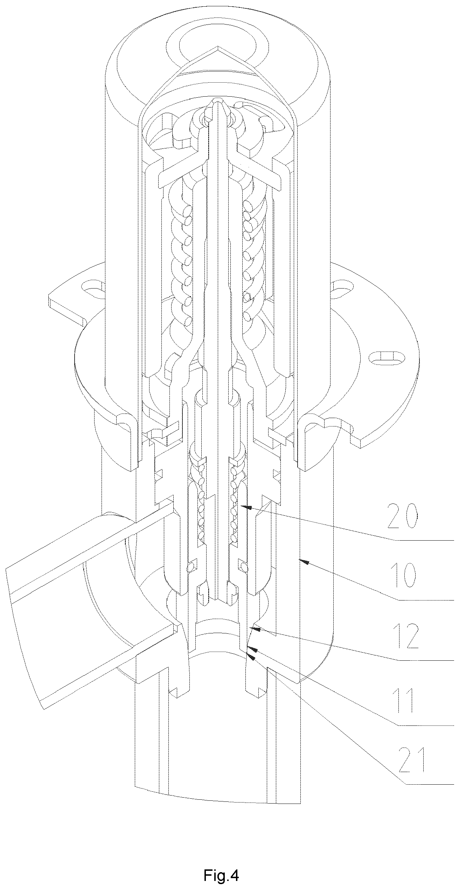

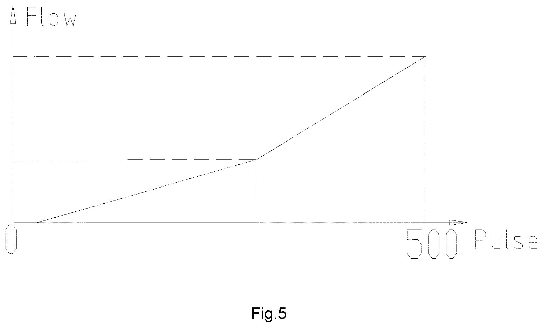

As shown in Figs. 1-5, the embodiments of the invention provide a flow regulating valve. The flow regulating valve includes: a valve body 10, wherein the valve body 10 is provided with a valve port, and an inner wall of the valve port is provided with a first conical surface 11; and a valve head 20, wherein an end of the valve head 20 is provided with a fillet 21, the valve head 20 is movably disposed in the valve body 10, to close or open the valve port, and when the valve port is closed, the fillet 21 abuts against the first conical surface 11.

By using the solution, the fillet 21 is disposed at the end of the valve head 20, and the valve port is sealed through abutment of the fillet 21 against the first conical surface 11. The fillet 21 is able to be used to reduce wear during contact, thereby improving the sealing reliability and prolonging the service life of the flow regulating valve.

In an embodiment, a radius of the fillet 21 is R, 0.1 mm≤R≤1.0 mm. The radius of the fillet 21 is set to fall within the above range, such that machining is facilitated, and a desirable sealing effect is achieved.

In this embodiment, an outer peripheral surface of the valve head 20 is a cylindrical surface, and an included angle between the cylindrical surface and the first conical surface 11 is A, A≤10°. In this way, after the valve port is closed, a gap between the outer peripheral surface of the valve head 20 and the first conical surface 11 is very small, such that the sealing effect is improved and the internal leakage is reduced.

In this embodiment, when the valve port is closed, a distance between an end with a larger diameter of the first conical surface 11 and an end surface 22 of the valve head 20 is L, L≤2 mm.

The flow characteristic curve represents a relation between a flow of the flow regulating valve and an opening degree (that is, a movement distance of the valve head) of the valve port. In another embodiment, the inner wall of the valve port is further provided with a second conical surface 12, and an end with a smaller diameter of the second conical surface 12 is connected with an end with a larger diameter of the first conical surface 11. By arranging the second conical surface 12, a flow characteristic curve is in a shape of a polygonal line in the process of opening or closing the valve port, thus satisfying use requirements in some cases.

Specifically, an included angle between a generatrix of the first conical surface 11 and a radial plane of the valve body 10 is a and an included angle between a generatrix of the second conical surface 12 and the radial plane of the valve body 10 is b, wherein a>b. Through the above arrangement, in the process of opening or closing the valve port 20, a flow area between an outer wall of the valve head 20 and the inner wall of the valve port changes in a shape of polygonal line, such that the flow characteristic curve has a shape of polygonal line.

In this embodiment, the valve body 10 is provided with an accommodation cavity, the valve port is in communication with the accommodation cavity, and the valve head 20 is movably disposed in the accommodation cavity. Moreover, a side wall of the valve body 10 is provided with a circulation port, and when the valve port is opened, the valve port is in communication with the circulation port through the accommodation cavity. Under the condition that the valve port is closed, the valve port is disconnected from the circulation port.

In this embodiment, the flow regulating valve further includes: a guide sleeve 30 disposed in the valve body 10, wherein the valve head 20 is movably disposed in the guide sleeve 30, and the guide sleeve 30 is able to guide the valve head 20 to move the valve head 20 smoothly. The flow regulating valve further includes a drive portion 40, wherein the drive portion 40 is in drive connection with the valve head 20 to drive the valve head 20 to move. The drive portion 40 is able to use an electromagnetic drive mode.

Specifically, the flow regulating valve is an electronic expansion valve or a flow regulating valve in another form.

What are described above are merely some embodiments of the invention and are not intended to limit the invention, and for those skilled in the art, various modifications and changes can be made to the invention. Any modification, equivalent substitution, improvement, etc. made within the spirit and principles of the invention shall fall within the protection scope of the invention.

## Claims

1. A flow regulating valve, comprising:
a valve body (10), wherein the valve body (10) is provided with a valve port, and an inner wall of the valve port is provided with a first conical surface (11); and
a valve head (20), wherein an end of the valve head (20) is provided with a fillet (21), the valve head (20) is movably disposed in the valve body (10), to close or open the valve port, and when the valve port is closed, the fillet (21) abuts against the first conical surface (11).

2. The flow regulating valve as claimed in claim 1, wherein a radius of the fillet (21) is R, 0.1 mm≤R≤1.0 mm.

3. The flow regulating valve as claimed in claim 2, wherein an outer peripheral surface of the valve head (20) is a cylindrical surface, and an included angle between the cylindrical surface and the first conical surface (11) is A, A≤10°.

4. The flow regulating valve as claimed in claim 1, wherein when the valve port is closed, a distance between an end with a larger diameter of the first conical surface (11) and an end surface (22) of the valve head (20) is L, L≤2 mm.

5. The flow regulating valve as claimed in claim 1, wherein the inner wall of the valve port is further provided with a second conical surface (12), and an end with a smaller diameter of the second conical surface (12) is connected with an end with a larger diameter of the first conical surface (11).

6. The flow regulating valve as claimed in claim 5, wherein an included angle between a generatrix of the first conical surface (11) and a radial plane of the valve body (10) is a, and an included angle between a generatrix of the second conical surface (12) and the radial plane of the valve body (10) is b, wherein
a>b.

7. The flow regulating valve as claimed in claim 1, wherein the valve body (10) is provided with an accommodation cavity, the valve port is in communication with the accommodation cavity, and the valve head (20) is movably disposed in the accommodation cavity.

8. The flow regulating valve as claimed in claim 1, wherein a side wall of the valve body (10) is provided with a circulation port, and when the valve port is opened, the valve port is in communication with the circulation port.

9. The flow regulating valve as claimed in claim 1, further comprising:
a guide sleeve (30) disposed in the valve body (10), wherein the valve head (20) is movably disposed in the guide sleeve (30); and
a drive part (40), wherein the drive part (40) is in drive connection with the valve head (20) to drive the valve head (20) to move.

10. The flow regulating valve as claimed in claim 1, wherein the flow regulating valve is an electronic expansion valve.
